## Europäisches Patentamt
## European Patent Office
## Office européen des brevets

(11) Veröffentlichungsnummer: **0 080 055**
**A2**

(12) # EUROPÄISCHE PATENTANMELDUNG

(21) Anmeldenummer: 82109453.9

(22) Anmeldetag: 13.10.82

(51) Int. Cl.³: **G 01 D 5/20**

(30) Priorität: 20.11.81 DE 3145933

(43) Veröffentlichungstag der Anmeldung: 01.06.83
Patentblatt 83/22

(84) Benannte Vertragsstaaten: **CH DE FR GB IT LI SE**

(71) Anmelder: **VACUUMSCHMELZE GMBH, Bereich Verträge und Patente Grüner Weg 37 Postfach 2253, D-6450 Hanau/Main 1 (DE)**

(72) Erfinder: **Hoefer, Hubert, Dipl.-Ing., Kaiserdamm 22, D-1000 Berlin 19 (DE)**
Erfinder: **Maiwald, Dieter, Dipl.-Ing., Brusebergstrasse 29, D-1000 Berlin 51 (DE)**

(54) **Elektromagnetischer Wegsensor.**

(57) Zur elektromagnetischen Erfassung von Geschwindigkeiten beweglicher Teile ist es bekannt, als elektromagnetischen Wegsensor eine Spule (3) mit vormagnetisiertem Weicheisenkern (2) in der Nähe eines Zahnrades oder eines anderen, den magnetischen Rückschluß des Weicheisenkerns (2) beeinflussenden bewegten Körpers (1) anzubringen. Hier besteht die Aufgabe, einen Wegsensor anzugeben, mit dem es möglich ist, die Drehrichtung zu erfassen, und der außerdem für einen großen Geschwindigkeitsbereich eindeutige Signale ergibt.

Die Lösung der Aufgabe besteht im wesentlichen in der Anordnung mehrerer gegenpolig magnetisierter Dauermagnete (4, 5), die zwischen dem bewegten Körper (1) und dem Weicheisenkern (2) angeordnet sind. Hier lassen sich Drehzahl und/oder Geschwindigkeit von bewegten, mit ferromagnetischen Teilen versehenen Körpern zuverlässig und in einem großen Bereich durch Zählung von Nulldurchgängen der induzierten Spannung ($U_S$) erfassen.

Vacuumschmelze GmbH                    VP 81 P 9569

Hanau


## Elektromagnetischer Wegsensor

Die Erfindung betrifft einen elektromagnetischen Wegsensor zur Umsetzung der Bewegung eines mit einer ferromagnetisch wirksamen Teilung versehenen bewegten Körpers (Zahnrad, Zahnstange, Stift), in elektrische Impulse mit einem in der Nähe des bewegten Körpers angeordneten, mit einer Spule umwickelten Weicheisenkern und mit einem Dauermagneten, der in Achsrichtung neben dem Weicheisenkern angeordnet ist.

Ein derartiger Wegsensor ist aus BOSCH-Technische Berichte 7, (1980), Ausgabe 2, auf Seite 85, bekannt. Je nach Stellung der Zähne des Impulsrades relativ zum Weicheisenkern des Wegsensors wird der von einem Dauermagneten erzeugte Fluß im Weicheisenkern verstärkt oder geschwächt. Die dadurch resultierenden Spannungsschwankungen in einer den Weicheisenkern umgebenden Spule können zur Ermittlung der am Wegsensor vorbeigeführten Zähnezahl und damit zur Geschwindigkeit des Impulsrades herangezogen werden.

Grenzen dieses Wegsensors bestehen bei langsamen Geschwindigkeiten darin, daß die induzierte Spannung in der Spule wegen der langsamen Flußänderungsgeschwindigkeit zu klein wird und liegen bei sehr hohen Geschwindigkeiten darin, daß die Zeitkonstante, mit der der Fluß wieder auf seinen Ausgangswert zurückkehrt, zu groß ist, um dem sich ändernden Rückschluß richtig folgen zu können.

Aufgabe der vorliegenden Erfindung ist es, einen Wegsensor anzugeben, bei dem ein wesentlich größerer Bereich

0080055

für die Geschwindigkeit des bewegten Körpers erfaßt werden kann und eine eindeutige Ermittlung der Geschwindigkeit durch Zählen von Nulldurchgängen einer elektrischen Wechselspannung gegeben ist. Außerdem soll die erfindungsgemäße Anordnung bei bewegten Körpern mit unterschiedlich großen magnetischen und nichtmagnetischen Bereichen die Erfassung der Drehrichtung gestatten.

Diese Aufgabe wird erfindungsgemäß dadurch gelöst, daß mindestens zwei Dauermagnete - in Bewegungsrichtung des bewegten Körpers gesehen - hintereinander an einer Stirnseite des Weicheisenkerns befestigt sind, daß die Dauermagnete abwechselnd in unterschiedlicher Richtung magnetisiert sind und daß sich die Dauermagnete zwischen dem bewegten Körper und dem Weicheisenkern befinden.

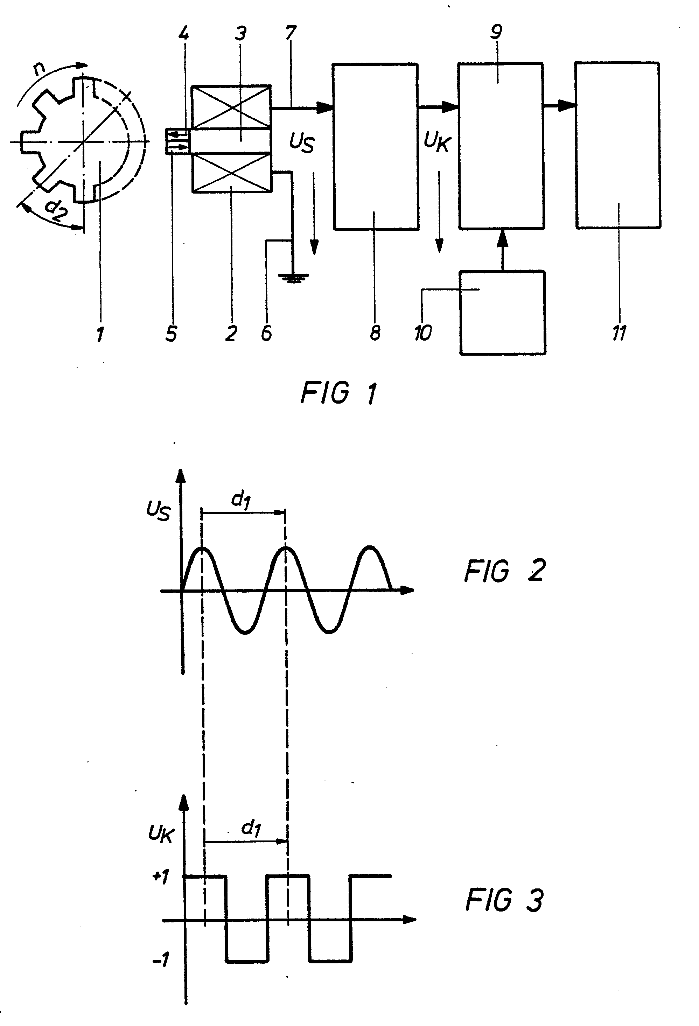

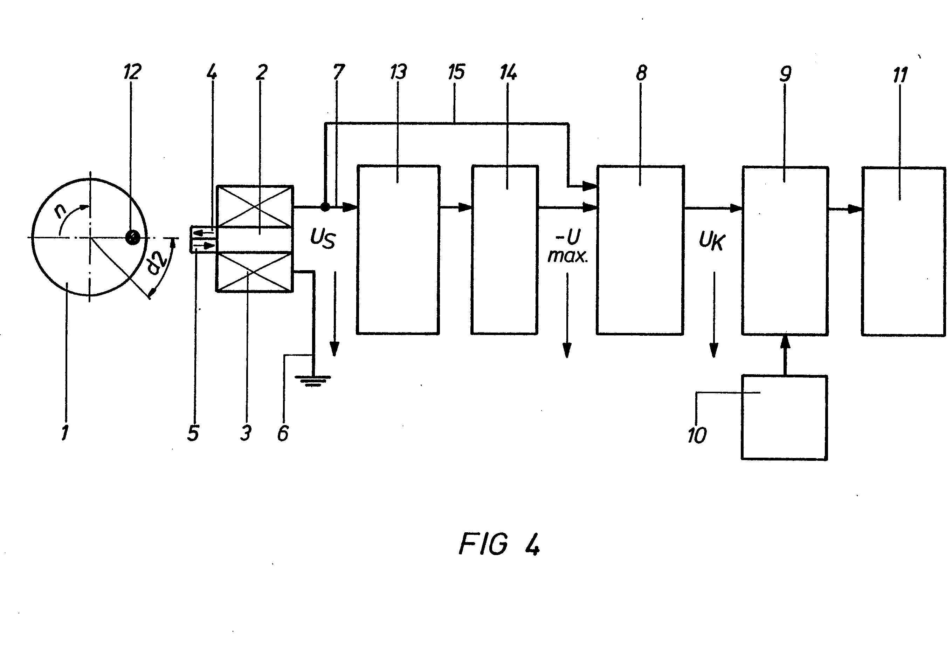

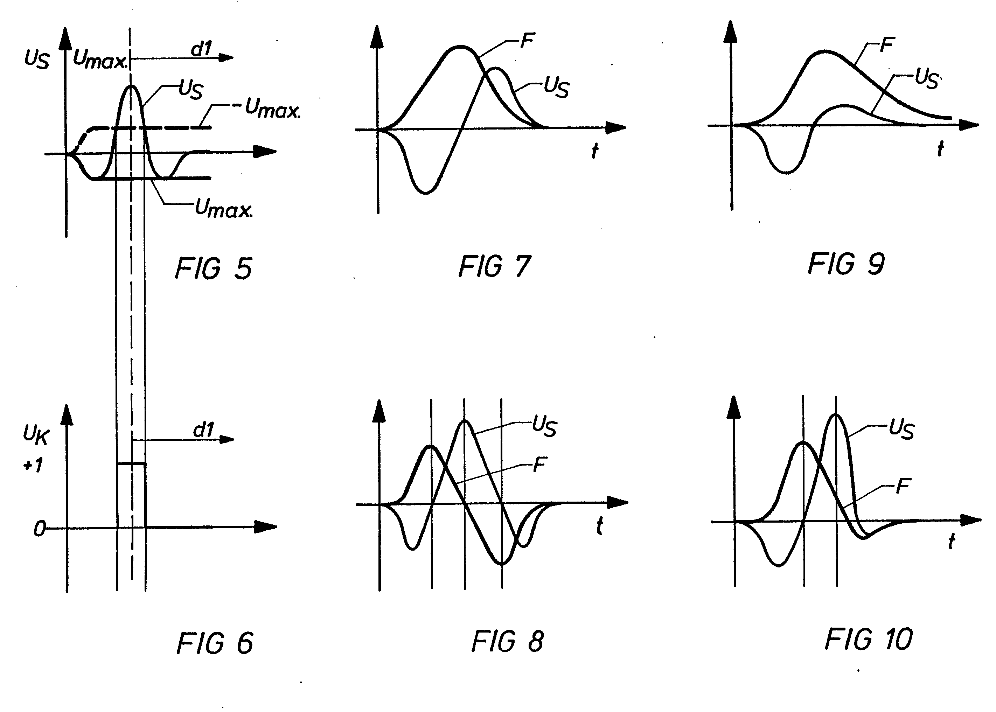

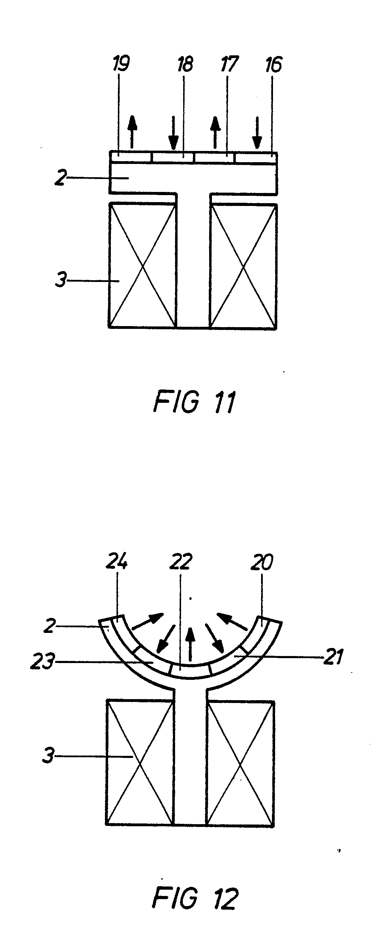

Je ein Ausführungsbeispiel der Erfindung ist in den Figuren 1 und 4 dargestellt. Die Figuren 2,3,5 und 6 zeigen zeitliche Abläufe von Spannungen, die an verschiedenen Stellen im jeweiligen Ausführungsbeispiel gemessen werden. Die Figuren 7 bis 10 zeigen Fluß- bzw. Spannungsverläufe im Vergleich zu Wegsensoren, die nur einen Dauermagneten zur Vormagnetisierung des Weicheisenkerns aufweisen. Weitere mögliche Formen für den Wegsensor sind in Figur 11 und 12 dargestellt.

In Figur 1 ist in der Nähe eines bewegten Körpers 1, der hier als Zahnrad ausgeführt ist, ein Weicheisenkern 2 mit einer den Weicheisenkern umgebenden Spule 3 angeordnet. Unmittelbar in Achsrichtung an den Weicheisenkern 2 anschließend sind zwei Dauermagnete (4, 5) so an der dem bewegten Körper 1 zugewandten Stirnseite des Weicheisenkerns 2 befestigt, daß deren Magnetisierungsrichtungen gegenläufig sind, Anstelle eines Zahnrades als bewegter Körper kann selbstverständlich auch eine Zahnstange zum Messen gradliniger Bewegungen zur Anwendung kommen. Bei Verwendung von bewegten Körpern aus unmagnetischem Material ist es auch möglich, beispielsweise auf einem zylindrischen Körper ferromagnetische Beschichtungen in bestimmten Abständen aufzubringen.

Die Anschlüsse 6 und 7 der Spule 3 sind einerseits mit Erde und andererseits mit einem Komparator 8 verbunden. Wenn den Dauermagneten 4 und 5 ein Zahn des bewegten Körpers oder eine Zahnlücke genau gegenübersteht, ist der Fluß im Weicheisenkern 2 praktisch Null, da sich die Magnetisierungen der Dauermagnete 4 und 5 gegenseitig aufheben und kein magnetischer Fluß die Spule 3 durchdringt. Bei einem Wechsel von Zahn zu Zahnlücke bzw. umgekehrt wird jedoch für jeweils einen der beiden Dauermagnete 4 oder 5 der magnetische Widerstand größer als für den anderen sein. Es wird also in dem Weicheisenkern 2 bei Bewegung des Körpers 1 ein Wechselfluß auftreten, der eine Wechselspannung in der Spule 3 verursacht. Der Verlauf dieser Wechselspannung $U_S$ ist in Figur 2 in Abhängigkeit von dem Drehwinkel dargestellt. Die Strecke d1 in dem Diagramm entspricht dabei dem Drehwinkel d2 in Figur 1. Diese Spannung $U_S$ wird dem Komparator 8 über den Anschluß 7 zugeführt. Der Komparator 8 ist nun so aufgebaut, daß er in Abhängigkeit von der Polarität der ihm zugeführten Spannung eine positive oder eine negative konstante Ausgangsspannung abgibt. Am Ausgang des Komparators 8 entsteht damit eine Spannung $U_K$, wie sie in Figur 3 dargestellt ist. In einem an den Ausgang des Komparators 8 angeschlossenen Zähler 9, der von einem Zeitgeber für das jeweilige Meßintervall beeinflußt ist, lassen sich die Nulldurchgänge der Spannung $U_S$ aufsummieren

und in einer an sich bekannten Auswerteschaltung 11 wird die Drehzahl bzw. der Drehwinkel oder der zurückgelegte Weg des bewegten Körpers erfaßt und angezeigt bzw. ausgedruckt.

Bei dem Ausführungsbeispiel nach Figur 1 wurde ein bewegter Körper 1 verwendet, bei dem ferromagnetische und nichtferromagnetische Bereiche etwa gleich groß sind. Im Ausführungsbeispiel nach Figur 4 ist der ferromagnetische Körper 1 nunmehr als Scheibe ausgebildet, die an einer Stelle des Umfangs einen ferromagnetischen Stift 12 aufweist. Dieser wird an dem aus Weicheisenkern 2, Spule 3, und Dauermagneten 4 und 5 bestehenden Wegsensor einmal pro Umdrehung vorbeigeführt. Der Wegsensor ist hier genauso aufgebaut wie im Ausführungsbeispiel nach Figur 1. Bei dieser Anordnung ergibt sich eine Flußänderung im Weicheisenkern 2 pro Umdrehung nur einmal und für eine kurze Zeit vor und nach dem Vorbeiführen des Stiftes 12 am Weicheisenkern 2. Dies hat zur Folge, daß sich bei bestimmter Drehzahl der in Figur 5 dargestellte Spannungsverlauf der Spannung $U_S$ ergibt. Diese Spannung erreicht erst einen kleinen negativen und dann einen großen positiven und anschließend wieder einen kleinen negativen Scheitelwert $U_{max}$.

Um bei diesem Spannungsverlauf wiederum durch Zählen von Nullstellen eindeutige Signale für die Geschwindigkeit des bewegten Körpers erhalten zu können, ist an den Anschluß 7 der Spule 3 ein Speicher 13 für den negativen Spitzenwert der Spannung $U_S$ angeschlossen. Dieser Speicher besitzt damit an seinem Ausgang eine konstante negative Spannung, die in Figur 5 mit $U_{max}$ bezeichnet ist. Am Ausgang des Speichers 13 ist ein Inverter 14 angeschlossen, der eine Vorzeichenumkehr der Spannung $U_{max}$

0080055

bewirkt. An dessen Ausgang liegt damit die in Figur 5 mit $-U_{max}$ bezeichnete Gleichspannung an. Diese Spannung ist immer etwa halb so groß wie der positive Maximalwert der Spannung $U_S$ der Spule 3 und ist damit für den dem Inverter 14 nachgeschalteten Komparator 8 als Vergleichsspannung geeignet. Der Komparator 8 ist zur Durchführung des Vergleichs zwischen der Spannung $U_S$ und $-U_{max}$ mit einem zweiten Eingang über eine Leitung 15 unmittelbar mit dem Anschluß 7 der Spule 3 verbunden. An den Komparator 8 schließen sich - wie in Figur 1 - der Zähler 9, der Zeitgeber 10 und die Auswerteschaltung 11 an. Am Ausgang des Komparators 8 ergibt sich damit die in Figur 6 dargestelle Spannung $U_K$.

Falls die Drehrichtung des bewegten Körpers sich umkehrt, wird auch die Polarität des Maximums der Spannung $U_S$ umgekehrt sein. Damit ist es möglich, zusätzlich zur Geschwindigkeit des bewegten Körpers 1 auch die Richtung der Bewegung zu erfassen und auszuwerten. Hierzu ist die Auswerteschaltung in Figur 4 (Speicher 13) dahingehend zu erweitern, so daß der Speicher 13 negative und positive Spitzenwerte der Spannung $U_S$ speichern kann. Mittels einer zusätzlichen Logikschaltung wird der betragsmäßig kleinere Spitzenwert der Spannung $U_S$ dem Inverter 14 zugeführt. Selbstverständlich kann die Verarbeitung des von der Spule 3 gelieferten elektrischen Signals nach entsprechender Umformung auch von einem Rechner vorgenommen werden.

Neben der Möglichkeit, auch Drehrichtungen mit dem erfindungsgemäßen Wegsensor zu erfassen, besteht ein wesentlicher Vorteil des erfindungsgemäßen Wegsensors darin, daß auch sehr hohe Frequenzen bei schnellen Bewegungen des Körpers 1 noch zu eindeutigen Aussagen führen.

Durch Wahl einer entsprechenden Feineinteilung der ferromagnetischen Abschnitte auf dem bewegten Körper 1 ist es
möglich, sehr langsame Bewegungen zuverlässig zu erfassen.
Der Verlauf des magnetischen Flusses F und der Spannung $U_S$
in der Spule 3 ist bei einer Frequenz von 100 Hz für einen
Wegsensor mit einem Dauermagneten in Figur 7 und für einen
Wegsensor mit zwei Dauermagneten in Figur 8 dargestellt.

Die gleichen Kurven zeigen die Figuren 9 und 10 für den
Fall, daß eine Frequenz von 5200 Hz angenommen wird. Man
sieht, daß bei Verwendung eines Dauermagneten der Fluß nur
langsam abklingt, während durch den gegenpolig angeordneten zweiten Dauermagneten im Falle der Figur 10 eine Flußumkehr erzwungen wird, mit der Folge, daß wesentlich höhere Frequenzen für die induzierte Spannung einwandfrei
auswertbar sind.

Bei dem erfindungsgemäßen Wegsensor kommt es darauf an,
daß mindestens 2 Dauermagnete mit unterschiedlicher Magnetisierungsrichtung - in Bewegungsrichtung des bewegten
Körpers 1 gesehen - hintereinander angeordnet sind. Es ist
für bestimmte Anwendungen vorteilhaft, hierfür mehrere
Dauermagnete vorzusehen, wie aus dem Beispiel der Dauermagnete 16 bis 19 aus Figur 11 ersichtlich ist. Es ist
weiterhin vorteilhaft, bei einem bewegten Körper zur Drehzahlmessung die Stirnseiten des Weicheisenkerns mit den
darauf angeordneten Dauermagneten 20 bis 24 gekrümmt auszuführen, so daß sich der Sensor an den Krümmungsradius
des bewegenten Körpers anpaßt. Dies ist in Figur 12 dargestellt.

Patentansprüche

1. Elektromagnetischer Wegsensor zur Umsetzung der Bewegung eines mit einer ferromagnetisch wirksamen Teilung versehenen bewegten Körpers (1) (Zahnrad, Zahnstange, Stift), in elektrische Impulse mit einem in der Nähe des bewegten Körpers (1) angeordneten, mit einer Spule (3) umwickelten Weicheisenkern (2) und mit einem Dauermagneten,der in Achsrichtung neben dem Weicheisenkern (2) angeordnet ist,
d a d u r c h   g e k e n n z e i c h n e t ,
daß mindestens zwei Dauermagnete (4, 5) - in Bewegungsrichtung des bewegten Körpers (1) gesehen - hintereinander an einer Stirnseite des Weicheisenkerns (2) befestigt sind,
daß die Dauermagnete (4, 5) abwechselnd in unterschiedlicher Richtung magnetisiert sind und
daß sich die Dauermagnete (4, 5) zwischen dem bewegten Körper (1) und dem Weicheisenkern (2) befinden.

2. Elektromagnetischer Wegsensor nach Anspruch 1,
d a d u r c h   g e k e n n z e i c h n e t ,
daß die Bereiche mit ferromagnetischem Material (Stift 12) und mit weniger ferromagnetischem Material unterschiedlich groß gewählt sind.

3. Verfahren zur Auswertung der Impulse eines elektromagnetischen Wegsensors nach Anspruch 2, d a d u r c h   g e k e n n z e i c h n e t , daß die invertierte Spannung $(-U_{max})$ für den kleineren Spitzenwert der in der Spule (3) induzierten Spannung mit der Spannung $(U_S)$ in einem Komparator (8) verglichen wird und daß die Nullstellen der Differenzspannung zur Geschwindigkeitsbestimmung ausgewertet werden.

4. Verfahren zur Auswertung der Impulsspannung des elektromagnetischen Wegsensors nach Anspruch 2, d a d u r c h   g e k e n n z e i c h n e t , daß in einem Komparator (8) eine Ausgangsspannung gebildet wird, deren Polarität von der Richtung der Nulldurchgänge der Differenzspannung aus Spulenspannung $(U_S)$ und invertierter maximaler kleiner Spitzenspannung $(-U_{max})$ gebildet wird.

0080055
VP 81 P 9569

1/4

FIG 1

FIG 2

FIG 3

FIG 4

FIG 5

FIG 7

FIG 9

FIG 6

FIG 8

FIG 10

VP 81P 9569

0080055

19  18  17  16

2

3

FIG 11

24    22    20

2
23                    21

3

FIG 12